# EUROPÄISCHE PATENTSCHRIFT

(11) **EP 3 061 632 B1**
(45) Veröffentlichungstag und Bekanntmachung des Hinweises auf die Patenterteilung: **30.01.2019**
(21) Anmeldenummer: 15156706.2
(22) Anmeldetag: 26.02.2015
(51) Int. Cl.: B60D 5/00, B61D 17/22

(54) **ÜBERGANG ZWISCHEN ZWEI GELENKIG MITEINANDER VERBUNDENEN FAHRZEUGEN**
CONNECTION BETWEEN TWO VEHICLES WITH JOINTED COUPLINGS
PASSAGE ENTRE DEUX VÉHICULES RELIÉS DE MANIÈRE ARTICULÉE

(43) Veröffentlichungstag der Anmeldung: 31.08.2016
(73) Patentinhaber: Hübner GmbH & Co. KG, 34123 Kassel (DE)
(72) Erfinder: Knud, Mosaner, 34127 Kassel (DE); Heinrich, Marc, 200042 Shanghai (CN)
(74) Vertreter: Patentanwälte Walther Hinz Bayer PartGmbB

(56) Entgegenhaltungen:
- EP-A1- 2 604 451
- EP-A1- 2 832 562
- DE-A1- 4 127 535
- DE-A1- 19 821 083
- DE-U1-202013 000 165
- GB-A- 2 337 239

## Beschreibung

Die Erfindung betrifft einen Übergang zwischen zwei gelenkig miteinander verbundenen Fahrzeugen, umfassend mindestens einen eine Übergangseinrichtung tunnelartig umspannenden Balg, wobei der Balg zur Bildung von Wellen oder Falten mehrere ebenfalls tunnelförmig umlaufende Balgrahmen aufweist, wobei der Balg zwischen einzelnen Balgrahmen der Wellen oder Falten Abstandshalter aufweist.

Ein Übergang der eingangs genannten Art zwischen gelenkig miteinander verbundenen Fahrzeugen z. B. Gelenkbussen oder Schienenfahrzeugen, wie z. B. Straßenbahnen, ist aus dem Stand der Technik hinreichend bekannt. Ein solcher Übergang umfasst üblicherweise einen Balg, der eine sogenannte Übergangseinrichtung aufweist, beispielsweise eine Brücke oder eine Plattform, die sich zwischen den beiden Fahrzeugen erstreckt, tunnelartig umgibt Ein solcher Balg kann als Falten- oder Wellenbalg ausgebildet sein. In jedem Fall werden hierbei einzelne Streifen aus einem mit einem Elastomer beschichteten Festigkeitsträger durch ebenfalls tunnelförmig umlaufende, im Querschnitt U-förmig ausgebildete Balgrahmen zur Bildung der Falten oder Wellen von Falten- oder Wellenbälgen klemmend erfasst.

Aus der GB 2 337 239 A ist ein Balg als Teil eines Übergangs zwischen zwei Fahrzeugen oder Fahrzeugteilen bekannt, wobei zur Geräusch- und Wärmedämmung an jedem der beiden sich einander gegenüberliegenden Schenkel eines Balgelementes innen zwei Laschen vorgesehen sind, wobei die beiden Laschen sich innerhalb des Balgelementes überlappen. Durch die Überlappung der Laschen entsteht, wie bereits zuvor erläutert, die erhöhte Geräusch- und Wärmedämmung.

Aus der DE 41 27 535 A1 ist ein Faltenbalg als Teil eines Übergangs zwischen zwei gelenkig miteinander verbundenen Fahrzeugen oder Fahrzeugteilen bekannt, wobei der Balg aus falten- oder wellenförmigen Balgelementen ausgebildet ist. Die einzelnen falten- oder wellenförmigen Balgelemente weisen zwischen den Balgrahmen zweier miteinander verbundener Balgelemente Federn auf, wodurch auf die Schenkel der falten- oder wellenförmigen Balgelemente eine nach außen gerichtete Vorspannkraft aufgebracht wird.

Aus der DE 20 2013 000 165 U1 ist nun ein Übergangsbalg eines Gelenkfahrzeugs bekannt, wobei der Balg auf der Außenseite eine elastische Hülle aufweist, um den Balg egal bei welcher Fahrbewegung strömungsgünstig zu gestalten, das heißt eine Wirbelbildung im Bereich der wellen- oder faltenförmigen Balgelemente zu vermeiden.

Nun gibt es insbesondere Faltenbälge, die große und andere, die geringe Faltenhöhen aufweisen. Das heißt, es gibt insbesondere Faltenbälge, die bei einer verminderten Anzahl von Falten zur Erzielung einer dennoch hohen Auszugsweite Falten aufweisen, die sich durch eine große Faltentiefe auszeichnen. Insbesondere bei solchen Bälgen mit einer großen Faltentiefe wurde nun beobachtet, dass die Balgrahmen der einzelnen Falten im Einbauzustand des Balges nicht in einem im Wesentlichen gleichen Abstand zueinander verlaufen, sondern dass vielmehr die Balgrahmen im Dachbereich stark unterschiedliche Abstände zueinander aufweisen. Dies führt dazu, dass solche Bälge insbesondere im Bereich ihrer Ecken durch Aneinanderreiben der Falten einem erhöhten Verschleiß unterliegen.

Gleiches gilt, wenn auch im verminderten Maße, für sogenannte Wellenbälge.

Die der Erfindung zugrunde liegende Aufgabe besteht nunmehr darin, bei Falten oder Wellen eines Falten- oder Wellenbalges, den Verschleiß durch ein Aneinanderreiben der einzelnen Falten oder Wellen, insbesondere im Eckbereich zu vermindern.

Zur Lösung der Aufgabe wird erfindungsgemäß vorgeschlagen, dass der Balg nur in etwa im Boden- oder Dachbereich zwischen einzelnen Balgrahmen der Wellen oder Falten sowie zwischen einem Balgrahmen und einem mit dem jeweiligen Fahrzeug in Verbindung stehenden Fixpunkt Abstandshalter aufweist, sodass bei einer Knickbewegung des Gelenkfahrzeugs eine Dehnung der Abstandshalter im Wesentlichen nicht stattfindet, und wobei die Abstandshalter in Längsrichtung des Fahrzeugs elastisch nachgiebig ausgebildet sind. Durch diese Abstandshalter wird erreicht, dass die einzelnen Balgrahmen in einem definierten Abstand zueinanderstehen, wenn sich das Fahrzeug in der Neutralstellung, dass heißt in Stellung "Geradeausfahrt" befindet.

Vorteilhafte Merkmale und Ausgestaltungen der Erfindung ergeben sich aus den Unteransprüchen.

Die Abstandshalter sind in etwa auf der Dach- oder Bodenmitte des Balges angeordnet sind, also in der Nähe der neutralen Achse. Das bedeutet z. B., dass bei einer Knickbewegung des Gelenkfahrzeugs eine Dehnung der Abstandshalter im Wesentlichen nicht stattfindet.

Die Erfindung zeichnet sich weiterhin dadurch aus, dass die Abstandshalter elastisch nachgiebig ausgebildet sind. Insbesondere in Verbindung mit dem Merkmal, das die Balgrahmen sowohl untereinander durch Abstandshalter verbunden sind, als auch endseitig an einem Fixpunkt mit dem Fahrzeug in Verbindung stehen, wird erreicht, dass die Balgrahmen nach Art einer elastischen Kette abstandskonstant zueinander aufgereiht sind, das heißt, dass hierdurch ein gleicher Abstand der Balgrahmen zueinander gewährleistet ist. Der Fixpunkt kann hierbei einmal durch den Wagenkasten des Fahrzeugs als solchen oder auch durch einen unmittelbar mit dem Fahrzeug im Wesentlichen starr in Verbindung stehenden Balgrahmen gebildet sein, wobei der einen solchen Fixpunkt bildende Balgrahmen ein solcher ist, der zu dem Fahrzeug unmittelbar benachbart ist. Zu einem Balgrahmen zählt definitionsgemäß auch ein Mittelrahmen zwischen zwei Balghälften, die einen Balg zwischen zwei Fahrzeugen bilden. Hierbei ist des Weiteren vorgesehen, dass die Abstandshalter in Längsrichtung des Fahrzeugs elastisch nachgiebig ausgebildet sind, um insbesondere bei Nickbewegungen entsprechend nachgiebig sein zu können.

Nach einem weiteren Merkmal der Erfindung können die Abstandshalter jeweils als Federelemente ausgebildet sein, also beispielsweise in Form von Zugfedern.

Als besonders vorteilhaft hat sich allerdings nach einer Ausführungsform herausgestellt, wenn die Abstandshalter als ein elastisches Bandelement ausgebildet sind, die die einzelnen Balgrahmen verbinden bzw. die Verbindung zum Fixpunkt bewerkstelligen, der einmal durch den Wagenkasten des jeweiligen Fahrzeugs bereitgestellt werden kann, oder aber durch einen dem Wagenkasten des Fahrzeugs unmittelbar benachbarten Balgrahmen, der mit dem Fahrzeug im Wesentlichen starr oder fest in Verbindung steht.

Eine andere Ausführungsform zeichnet sich dadurch aus, dass die Bandelemente als ein die Wellen oder Falten erfassendes durchgehendes elastisches Band ausgebildet sind, wobei das Band endseitig jeweils mit einem mit dem jeweiligen Fahrzeug in Verbindung stehenden Fixpunkt angelenkt ist. Der Fixpunkt kann auch hierbei der Wagenkasten oder ein mit dem Wagenkasten im Wesentlichen starr in Verbindung stehender endseitiger Balgrahmen sein.

Beiden Ausführungsformen ist gemein, dass das elastische Band oder die Bandelemente zwischen zwei Balgrahmen durch die Balgrahmen klemmend erfasst werden. Hieraus wird deutlich, dass bei der Herstellung des Balges der Einbau der Bandelemente oder des Bandes mit in die Fertigung des Balges integriert wird und zwar insofern, dass die Balgrahmen nicht nur die aus einem beschichteten Festigkeitsträger bestehenden Streifen für die Falten oder Wellen erfassen, sondern darüber hinaus auch die Bandelemente oder das Band.

Nach einem weiteren Merkmal kann das Band oder die einzelnen Bandelemente aus einem Elastomer oder einem elastischen Gewebe ausgebildet sein.

Anhand der Zeichnungen wird die Erfindung nachstehend beispielhaft näher erläutert.
- Fig. 1: zeigt einen Gelenkbus als Gelenkfahrzeug in schematischer Darstellung;
- Fig. 2: zeigt einen Ausschnitt eines Faltenbalgs in einer Seitenansicht im Schnitt mit einzelnen Bandelementen;
- Fig. 2a: zeigt einen Ausschnitt gemäß Fig. 2, wobei die einzelnen Bandelemente ein durchgehendes Band bilden;
- Fig. 3: zeigt eine Aufsicht auf das Dach des Faltenbalges gemäß Fig. 2 und Fig. 2a.

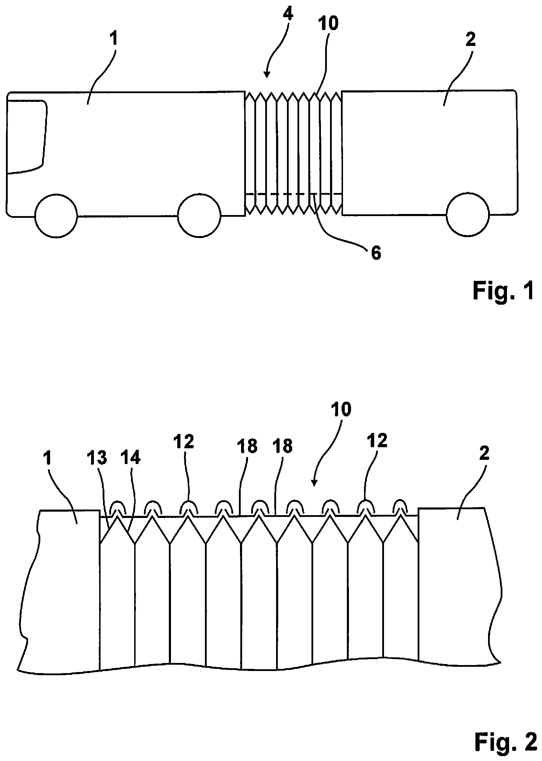

Gemäß Fig. 1 sind die beiden Fahrzeuge 1 und 2 des Gelenkfahrzeuges durch den insgesamt mit 4 bezeichneten Übergang verbunden. Der Übergang 4 umfasst eine Übergangseinrichtung, beispielsweise eine Brücke oder eine Plattform 6, die von dem Balg 10 tunnelförmig umspannt ist. Die Übergangseinrichtung dient dazu, Personen das Hinüberwechseln zwischen den Fahrzeugen 1 und 2 zu ermöglichen.

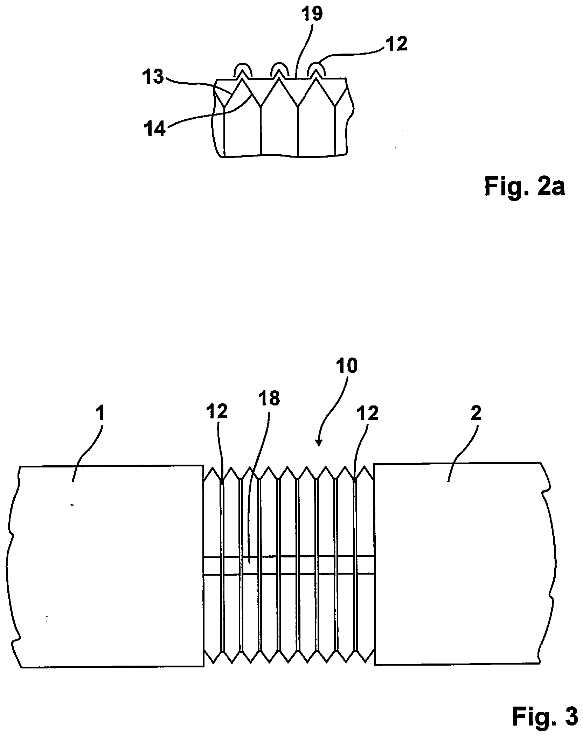

Fig. 2 zeigt in einer Seitenansicht als Ausschnitt den erfindungsgemäßen Balg 10 des Übergangs 4 in einer ersten Ausführungsform. Hierbei sind die einzelnen Balgrahmen 12 erkennbar, die jeweils zwei Stoffstreifen 13 und 14 klemmend erfassen. Allerdings werden nicht nur die Stoffstreifen 13 und 14 als mit einem Elastomer beschichtete Festigkeitsträger klemmend erfasst, sondern auch die als Abstandshalter fungierenden Bandelemente 18. Das heißt, dass die Anbringung der Bandelemente 18 in den Produktionsprozess eingebunden wird.

Fig. 2a zeigt eine zweite Ausführungsform, die sich von der gemäß Fig. 2 allein dadurch unterscheidet, dass die einzelnen Bandelemente 18 ein durchgehendes Band 19 bilden.

Fig. 3 zeigt nun eine Aufsicht auf das Dach des Balges, woraus erkennbar ist, dass das Band 19 oder die Bandelemente etwa auf der Mitte des Daches des Balges verlaufen.

Beiden Ausführungsformen ist gemein, dass der jeweils letzte Balgrahmen 12, also der Balgrahmen, der unmittelbar zu dem jeweiligen Fahrzeug benachbart ist, mit dem Wagenkasten des jeweiligen Fahrzeugs in Längsrichtung nachgiebig verbunden ist. Deshalb sind die Bandelemente 18 oder das durchgehende Band 19 mit dem Wagenkasten des jeweiligen Fahrzeugs verbunden, das heißt, der Wagenkasten bildet den Fixpunkt.

### Bezugszeichenliste:

- 1: Fahrzeug
- 2: Fahrzeug
- 4: Übergang
- 6: Plattform, Brücke
- 10: Balg
- 12: Balgrahmen
- 13: Stoffstreifen (mit Elastomer beschichteter Festigkeitsträger)
- 14: Stoffstreifen (mit Elastomer beschichteter Festigkeitsträger)
- 18: Bandelement
- 19: durchgehendes Band

## Patentansprüche

1. Übergang (4) zwischen zwei gelenkig miteinander verbundenen Fahrzeugen (1, 2), umfassend mindestens einen eine Übergangseinrichtung tunnelartig umspannenden Balg (10), wobei der Balg (10) zur Bildung von Wellen oder Falten mehrere ebenfalls tunnelartig umlaufende Balgrahmen (12) aufweist, wobei der Balg (10) zwischen einzelnen Balgrahmen der Wellen oder Falten Abstandshalter aufweist,
**dadurch gekennzeichnet,**
**dass** der Balg (10) die Abstandshalter nur in etwa auf der Boden- oder Dachmitte zwischen den einzelnen Balgrahmen (12) der Wellen oder Falten, sowie zwischen einem Balgrahmen und einen mit dem jeweiligen Fahrzeug in Verbindung stehenden Fixpunkt aufweist, sodass bei einer Knickbewegung des Gelenkfahrzeugs eine Dehnung der Abstandshalter im Wesentlichen nicht stattfindet,
wobei die Abstandshalter in Längsrichtung des Fahrzeugs elastisch nachgiebig ausgebildet sind.

2. Übergang (4) zwischen zwei gelenkig miteinander verbundenen Fahrzeugen (1, 2) nach Anspruch 1,
**dadurch gekennzeichnet,**
**dass** die Abstandshalter jeweils als Federelemente ausgebildet sind.

3. Übergang (4) zwischen zwei gelenkig miteinander verbundenen Fahrzeugen (1, 2) nach Anspruch 1
**dadurch gekennzeichnet,**
**dass** die Abstandshalter jeweils als elastisches Bandelement (18) ausgebildet sind.

4. Übergang (4) zwischen zwei gelenkig miteinander verbundenen Fahrzeugen (1, 2) nach Anspruch 3,
**dadurch gekennzeichnet,**
**dass** die Bandelemente (18) als ein die Wellen oder Falten erfassendes durchgehendes elastisches Band (19) ausgebildet sind, wobei das durchgehende Band (19) endseitig jeweils an einem mit dem jeweiligen Fahrzeug in Verbindung stehenden Fixpunkt angelenkt ist.

5. Übergang (4) zwischen zwei gelenkig miteinander verbundenen Fahrzeugen (1, 2) nach Anspruch 4,
**dadurch gekennzeichnet,**
**dass** das durchgehende elastische Band (19) oder die elastischen Bandelemente (18) zwischen zwei Balgrahmen (12) durch die Balgrahmen (12) klemmend erfasst werden.

6. Übergang (4) zwischen zwei gelenkig miteinander verbundenen Fahrzeugen (1, 2) nach einem der Ansprüche 3 oder 4 oder 5,
**dadurch gekennzeichnet,**
**dass** das Band (19) oder die Bandelemente (18) aus einem Elastomer oder einem elastischen Gewebe ausgebildet sind.

## Claims

1. A passage (4) between two articulately connected vehicles (1, 2), comprising at least one bellows (10) spanning a passage system in a tunnel-like manner, wherein the bellows (10) for the formation of corrugations or pleats comprises several bellows frames (12) likewise circumferentially arranged in a tunnel-like manner, wherein the bellows (10) comprises spacers between individual bellows frames of the corrugations or pleats,
**characterised in**
**that** the bellows (10) comprises the spacers only approximately in the centre of the bottom or top area between individual bellows frames (12) of the corrugations or pleats as well as between a bellows frame and a fixed point connected with the respective vehicle, so that in the case of a bending movement of the articulated vehicle an elongation of the spacers substantially does not occur, wherein the spacers in longitudinal direction are formed in an elastically resilient manner.

2. The passage (4) between two articulately connected vehicles (1, 2) according to claim 1,
**characterised in**
**that** the spacers are each formed as spring elements.

3. The passage (4) between two articulately connected vehicles (1, 2) according to claim 1,
**characterised in**
**that** the spacers are each formed as an elastic band member (18).

4. The passage (4) between two articulately connected vehicles (1, 2) according to claim 3,
**characterised in**
**that** the band members (18) are formed as a continuous elastic band (19) grasping the corrugations or pleats, wherein the continuous band (19) on the ends is articulated each to a fixed point connected with the respective vehicle.

5. The passage (4) between two articulately connected vehicles (1, 2) according to claim 4,
**characterised in**
**that** the continuous elastic band (19) or the elastic band members (18) between two bellows frames (12) are grasped by the bellows frames (12) in a clamping manner.

6. The passage (4) between two articulately connected vehicles (1, 2) according to any one of claims 3 or 4 or 5,
**characterised in**
**that** the band (19) or the band members (18) are made from an elastomer or an elastic fabric.

## Revendications

1. Passage (4) entre deux véhicules reliés de manière articulée (1, 2) comportant au moins un soufflet (10) couvrant en forme de tunnel un système de passage, le soufflet (10) pour la formation des ondulations ou des plis comportant plusieurs cadres de soufflet (12) disposés également de manière circonférentielle en forme de tunnel, le soufflet (10) entre des cadres de soufflet individuels des ondulations ou des plis comportant des espaceurs,
**caractérisé en ce**
**que** le soufflet (10) comprend les espaceurs seulement environ au centre en bas ou en haut entre les cadres individuels de soufflet (12) des ondulations ou des plis ainsi qu'entre un cadre de soufflet et un point fixe qui est en communication avec le véhicule respectif de manière que lors d'un mouvement de pliage du véhicule articulé un allongement des espaceurs sensiblement n'a pas lieu,
les espaceurs dans le sens longitudinal du véhicule étant formés de manière élastiquement flexible.

2. Passage (4) entre deux véhicules reliés de manière articulée (1, 2) selon la revendication 1,
**caractérisé en ce**
**que** les espaceurs sont formé chacun en tant qu'élément de ressort.

3. Passage (4) entre deux véhicules reliés de manière articulée (1, 2) selon la revendication 1,
**caractérisé en ce**
**que** les espaceurs sont chacun formé en tant qu'élément en bande élastique (18).

4. Passage (4) entre deux véhicules reliés de manière articulée (1, 2) selon la revendication 3,
**caractérisé en ce**
**que** les éléments en bande (18) sont formés en tant que bande élastique continue (19) saisissant les ondulations ou les plis, la bande continue (19) étant articulée aux extrémités chacune à un point fixe en communication avec le véhicule respectif.

5. Passage (4) entre deux véhicules reliés de manière articulée (1, 2) selon la revendication 4,
**caractérisé en ce**
**que** la bande élastique continue (19) ou les éléments en bande élastique (18) entre deux cadres de soufflet (12) sont saisis par serrage par les cadres de soufflet (12).

6. Passage (4) entre deux véhicules reliés de manière articulée (1, 2) selon l'une quelconque des revendications 3 ou 4 ou 5,
**caractérisé en ce**
**que** la bande (19) ou les éléments en bande (18) sont formés d'un élastomère ou d'un tissu élastique.
